# DEMANDE DE BREVET EUROPEEN

(11) **EP 4 603 336 A1**
(43) Date de publication de la demande: **20.08.2025**
(21) Numéro de dépôt: 25156156.9
(22) Date de dépôt: 06.02.2025
(51) Int. Cl.: B60R 7/04, B60K 35/50, B60R 16/02

(54) **CONSOLE AMÉNAGÉE POUR VÉHICULE AUTOMOBILE**

(30) Priorité: 14.02.2024 FR 2401453
(71) Demandeur: Renault s.a.s, 92100 Boulogne Billancourt (FR)
(72) Inventeur: DURON, Frédéric, 78280 GUYANCOURT (FR); FRILEUX, Stéphane, 78280 GUYANCOURT (FR); VERDERA, Damien, 78280 GUYANCOURT (FR)

(57) **Abrégé**

Console de véhicule ( C) comprenant un corps qui comporte un aménagement comprenant une cavité (1) réalisée dans une partie libre dudit corps de console et débouchante vers l'extérieur dudit corps de console, et une zone de connexion (10), qui est située au fond de ladite cavité (1), comportant au moins un premier connecteur(11), et qui est délimitée par une paroi de forme circulaire (100) munie d'une pluralité d'éléments de verrouillage (101, 102, 103, 104), ledit premier connecteur (11) étant solidarisé à l'un desdits éléments de verrouillage (101), et
ladite zone de connexion (10) étant apte à recevoir un module fonctionnel muni d'un connecteur complémentaire audit premier connecteur (11) et d'une autre pluralité d'éléments de verrouillage complémentaires auxdits éléments de verrouillage de ladite zone de connexion de la console, ledit connecteur complémentaire étant solidarisé à l'un des éléments de verrouillage de ladite autre pluralité d'éléments de verrouillage complémentaires, de sorte que ladite zone de connexion (10) de la console et ledit module fonctionnel se connectent et se verrouillent entre eux.

## Description

L'invention concerne une console pour véhicule automobile comportant une cavité de connexion incluant un connecteur et apte à recevoir un module fonctionnel incluant un connecteur complémentaire au connecteur de la console pour s'y connecter. L'invention concerne aussi un ensemble comprenant ladite console et un module fonctionnel apte à s'y connecter.

La plupart des consoles de véhicule automobile, notamment les consoles centrales entre deux sièges de rang 1, ont un accès en partie supérieure, mais les parties basses sont très peu utilisées, le passage des conduits d'air en interne ainsi que les débattements des sièges avant limitent les opportunités. La console en partie basse est utilisée comme cache d'organes techniques, notamment divers conduits et la béquille support traverse de planche de bord.

L'invention a pour but de proposer un aménagement d'une console, convenant à divers types de console même aux consoles intégrant un cache d'organes techniques.

A cet effet, l'invention a pour objet un dispositif d'aménagement intérieur d'un véhicule automobile, comprenant un corps, notamment un corps de console du véhicule, lequel comprend :
- une cavité réalisée dans une partie libre dudit corps et débouchante vers l'extérieur dudit corps, et
- une zone de connexion, qui est située au fond de ladite cavité, comportant au moins un premier connecteur, et qui est délimitée par une paroi de forme circulaire munie d'une pluralité d'éléments de verrouillage de forme allongée comportant des parties en creux et en relief, disposés espacés les uns des autres et suivant la surface circonférentielle de ladite paroi de forme circulaire, ledit premier connecteur étant solidarisé à l'un desdits éléments de verrouillage, et ladite zone de connexion étant apte à recevoir un module fonctionnel muni d'un connecteur complémentaire audit premier connecteur et d'une autre pluralité d'éléments de verrouillage de forme allongée comportant des parties en creux et en relief, complémentaires auxdits éléments de verrouillage de ladite zone de connexion du corps, ledit connecteur complémentaire étant solidarisé à l'un des éléments de verrouillag de ladite autre pluralité d'éléments de verrouillage complémentaires, de sorte que ladite zone de connexion du corps et ledit module fonctionnel se connectent et se verrouillent entre eux par un mouvement de translation afin de mettre en correspondance leurs éléments de verrouillage respectifs puis par un mouvement de rotation pour verrouiller les éléments de verrouillage mis en correspondance entre eux et qu'en fin de rotation ledit premier connecteur et ledit connecteur complémentaire respectifs de la zone de connexion du corps et du module se connectent entre eux

En particulier, le corps est un corps de console de forme allongée, en particulier de forme globalement parallélépipédique.

La paroi de forme circulaire peut être une paroi de forme circulaire discontinue avec une forme globalement fermée sur elle-même. De préférence, elle est de forme circulaire continue.

De manière préférée, ledit premier connecteur de la zone de connexion du corps est un connecteur électrique et/ou de données, en particulier de type USB, et de préférence encore de type USB-C.

Pour rappel, le domaine de l'USB concerne la connexion de périphériques informatiques à un hôte conformément à la norme USB (de l'anglais « Universal Serial Bus » ou, en français, « Bus Universel en Série).

Avantageusement, ledit premier connecteur de la zone de connexion du corps est monté, en une extrémité de câble, dans une douille de forme prismatique de sorte que la base de plus petites dimensions du prisme soit du côté proximal de l'extrémité libre dudit connecteur. Cette extrémité est l'extrémité libre dudit premier connecteur quand ce dernier est non connecté au connecteur complémentaire du module. La forme de la douille facilite le branchement entre les connecteurs à connecter notamment leur guidage.

De préférence, ledit premier connecteur de la zone de connexion du corps est monté, en une extrémité de câble, dans une douille en matériau souple. En particulier, la douille est en silicone. Cette souplesse facilite le guidage du connecteur.

De préférence, la douille est de forme prismatique et en matériau souple. On entend par le terme « douille », l'enveloppe qui cache et protège la jonction entre un câble électrique et/ou de transport de données et un connecteur en soi.

Selon un mode de réalisation préféré de l'invention, ladite pluralité d'éléments de verrouillage disposés espacés les uns des autres et suivant la surface circonférentielle de ladite paroi de forme circulaire, est disposée suivant la surface circonférentielle intérieure de ladite paroi de forme circulaire.

Avantageusement, ladite cavité est latéralement débouchante vers l'extérieur dudit corps. Plus particulièrement la cavité est située en partie basse du corps. Un tel aménagement est facile d'accès.

L'invention a également pour objet, un ensemble console - module fonctionnel comprenant un dispositif tel que décrit précédemment, le corps appartenant à la console, et un module fonctionnel comportant une base de connexion munie d'au moins un connecteur complémentaire à l'au moins premier connecteur de la zone de connexion, et munie d'une autre pluralité d'éléments de verrouillage de forme allongée comportant des parties en creux et en relief, complémentaires aux éléments de verrouillage de ladite zone de connexion de la console, ledit connecteur complémentaire étant solidarisé à l'un des éléments de verrouillage de ladite autre pluralité d'éléments de verrouillage. Ledit module fonctionnel se connecte et se verrouille dans ladite zone de connexion de la console par un mouvement de translation afin de mettre en correspondance lesdits éléments de verrouillage de ladite autre pluralité d'éléments de verrouillage avec lesdits éléments de verrouillage de ladite zone de connexion de la console puis par un mouvement de rotation suivant la circonférence des parois de forme circulaire respectives de la zone de connexion de la console et de la base de connexion du module, afin de verrouiller les éléments de verrouillage respectifs de la console et du module entre eux et qu'en fin de rotation ledit premier connecteur et ledit connecteur complémentaire respectifs de la zone de connexion de la console et de la base de connexion du module se connectent entre eux. De manière préférée, ledit premier connecteur de la zone de connexion de la console étant un connecteur électrique et/ou de données, en particulier de type USB, de préférence de type USB-C, et ledit connecteur complémentaire de la base de connexion du module fonctionnel est un connecteur électrique et/ou de données, en particulier de type USB, de préférence de type USB-C. L'un est un connecteur mâle et l'autre un connecteur femelle.

Avantageusement, ledit premier connecteur de la zone de connexion de la console et ledit connecteur complémentaire de la base de connexion du module fonctionnel sont montés respectivement chacun dans une douille de forme prismatique et/ou en matériau souple, et de sorte que la base de plus petites dimensions du prisme respectif de chaque douille de connecteur soit du côté du branchement avec l'autre connecteur. Ceci facilite le guidage d'un connecteur vers l'autre lors du mouvement de rotation pour les connecter entre eux.

Avantageusement, l'un des connecteurs est fixé dans une partie en creux d'un élément de verrouillage, la face de branchement dudit connecteur étant dégagée, et ladite partie en creux étant encadrée par au moins une première face d'une paroi circulaire (de la zone de connexion de la console ou de la base de connexion du module) et une deuxième face d'une partie en relief d'un élément de verrouillage, opposée à ladite première face, lesdites première et deuxième faces s'étendant au moins partiellement suivant la direction de la circonférence de ladite paroi de forme circulaire de la zone de connexion de la console et/ou de la base de connexion du module et étant espacées sensiblement parallèlement entre elles, pour former des faces de guidage de l'autre connecteur vers ledit connecteur fixé dans ladite partie en creux d'un élément de verrouillage. Ceci facilite ainsi le guidage d'un connecteur vers l'autre lors du mouvement de rotation pour les connecter entre eux.

En particulier, la face de guidage la plus longue est celle de la paroi circulaire, elle est la paroi de guidage principale du connecteur complémentaire vers ledit premier connecteur ainsi fixé.

L'invention a également pour objet un véhicule automobile comprenant un ensemble console - module fonctionnel tel que décrits précédemment. En particulier, ladite console est une console centrale située entre deux sièges du véhicule.

Avantageusement, ledit premier connecteur de la zone de connexion est relié à une extrémité d'un câble dont l'autre extrémité est reliée à au moins une alimentation électrique du véhicule, en particulier à une batterie électrique du véhicule.

D'autres particularités et avantages de l'invention ressortiront à la lecture de la description faite ci-après de plusieurs modes de réalisation particuliers de l'invention, donnés à titre indicatif mais non limitatif, en référence aux dessins annexés sur lesquels :
[Fig.1] est une vue en perspective d'une console pour véhicule automobile comportant un aménagement selon un mode de réalisation de l'invention.
[Fig.2] est une vue partielle de l'aménagement de la console représentée en figure 1.
[Fig.3] est une vue agrandie d'une partie de la figure 2.
[Fig.4] représente un élément de protection de l'aménagement de la console représentée aux figures précédentes.
[Fig.5] est une vue en perspective d'un ensemble comprenant la console représentée en figure 1 et de l'élément de protection de l'aménagement de la console représenté en figure 4, selon un mode particulier de réalisation de l'invention.
[Fig.6A] est une vue en perspective d'un ensemble comprenant la console représentée en figure 1 et un module fonctionnel lumineux selon un mode particulier de réalisation de l'invention.
[Fig.6B] est une vue en perspective du module fonctionnel de la figure 6A.
[Fig.7A] est une vue en perspective d'un ensemble comprenant la console représentée en figure 1 et un module fonctionnel audio selon un autre mode particulier de réalisation de l'invention.
[Fig.7B] est une vue partielle en éclaté, et en perspective, du module fonctionnel audio de la figure 7A.

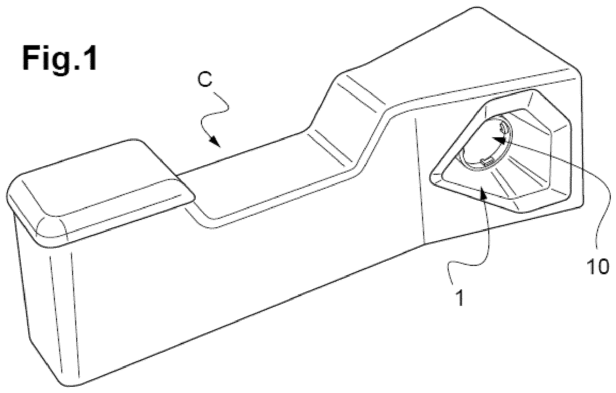

La figure 1 représente une console pour véhicule automobile comprenant un corps allongé, de forme globalement parallélépipédique, qui comporte un aménagement formant un aménagement de base utile à différentes applications. Cet aménagement de base comprend une cavité réalisée dans une partie libre dudit corps de console de sorte qu'elle soit débouchante latéralement vers l'extérieur dudit corps de console. Cet aménagement de base comprend en outre une zone de connexion 10 réalisée au fond de cette cavité 1. La cavité est située en partie basse de la console.

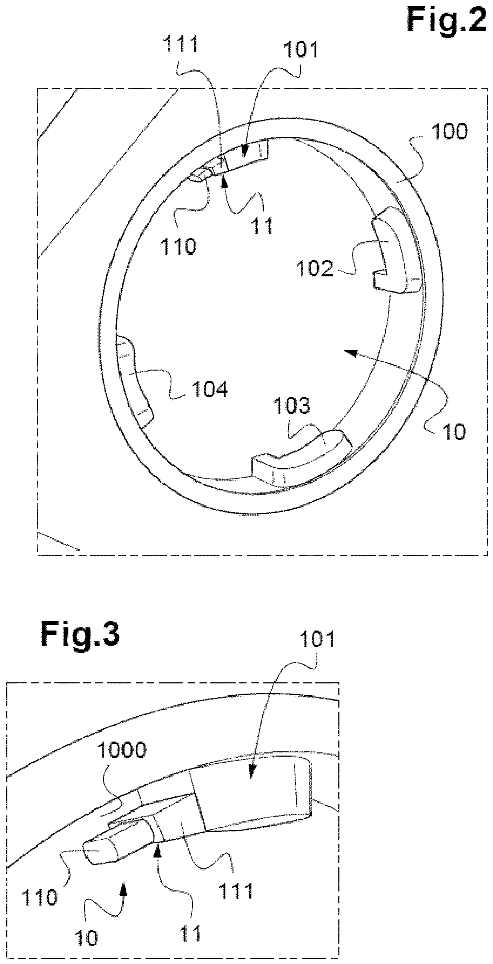

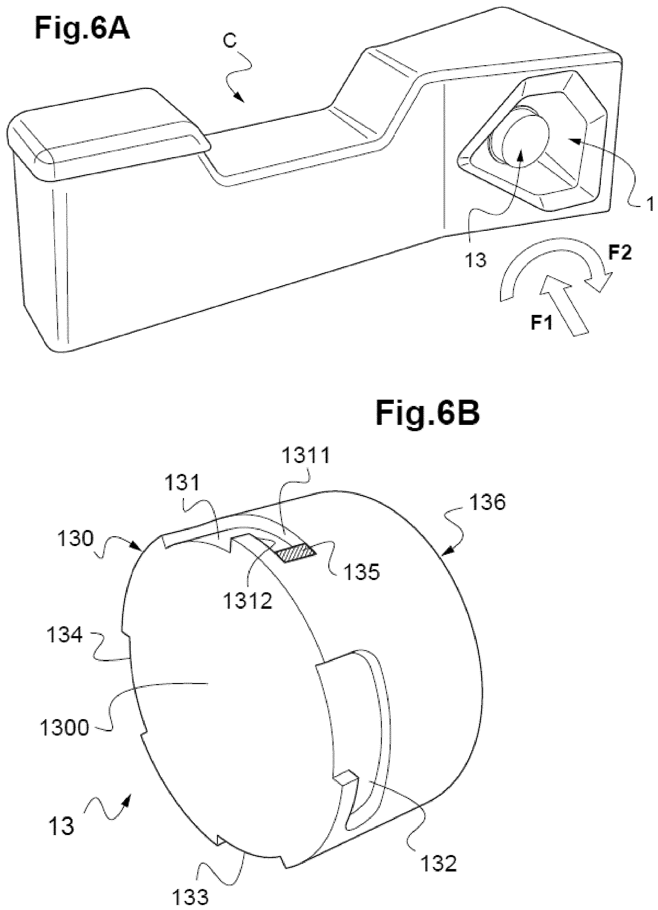

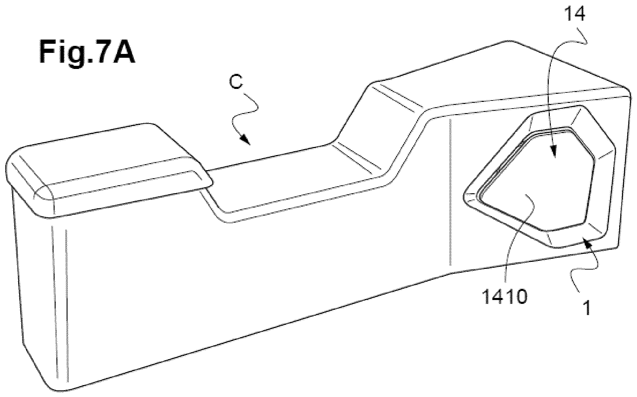

Ladite zone de connexion 10 est délimitée par une paroi circulaire 100 formant un anneau, et qui est muni d'une pluralité d'éléments de verrouillage de forme allongée comportant des parties en creux et en relief, comme illustrée par la figure 2, et qui pourra être désignée par la suite comme un ensemble d'encoches de verrouillage. Selon l'exemple, ledit ensemble d'encoches de verrouillage comprend quatre encoches 101, 102, 103, 104, disposées espacées les unes des autres et suivant la surface circonférentielle intérieure de l'anneau. Un connecteur mâle 11 de type USB-C, est solidarisé à l'une desdites encoches 101. Comme expliqué plus en détails plus loin, ladite zone de connexion 10 est apte à recevoir un module fonctionnel mobile, de préférence rechargeable, ou autrement dit « nomade », comme par exemple ceux représentés aux figures 6A-6B ou aux figures 7A-7B. Ledit module fonctionnel comprend une base de connexion comportant un connecteur femelle se connectant au connecteur mâle 11 de la zone de connexion 10 et une autre pluralité d'éléments de verrouillage de forme allongée comportant des parties en creux et en relief, de formes complémentaires auxdits éléments de verrouillage de ladite zone de connexion de la console. Cette autre pluralité d'éléments de verrouillage du module peut être aussi désignée par la suite comme des encoches de verrouillage complémentaires des encoches de verrouillage de la zone de connexion 10. Les éléments de verrouillage respectifs de la console et du module sont configurés de manière à s'emboiter entre eux suivant un mouvement de translation du module vers la zone de connexion 10 et à se verrouiller entre eux suivant un mouvement de rotation du module. L'une des encoches du module loge le connecteur femelle et a une fonction de guidage du connecteur mâle, de manière à les connecter ensemble en fin de rotation lors du verrouillage.

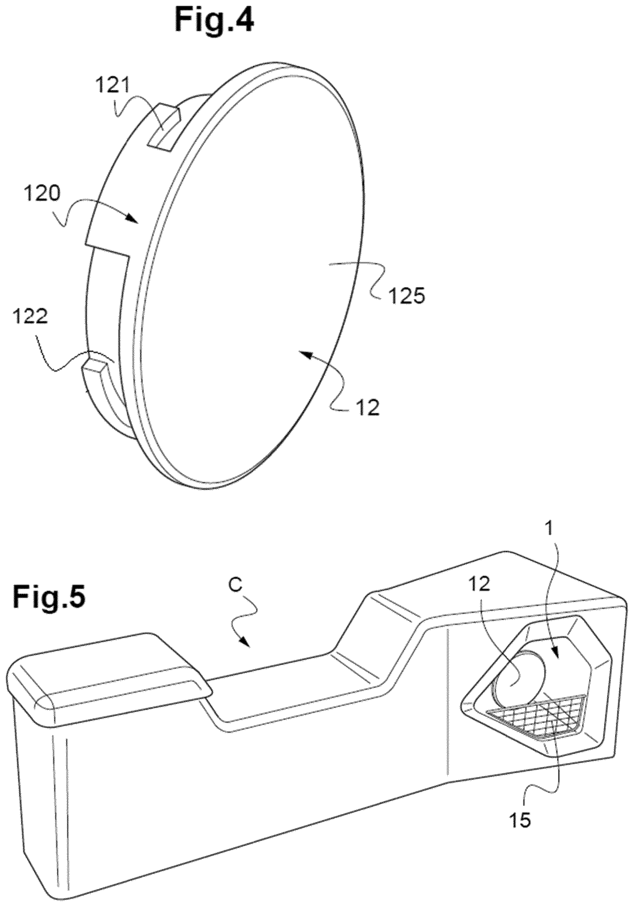

En référence aux figures 4 et 5, ladite zone de connexion 10 de la console, quand elle n'est pas utilisée pour y connecter un module fonctionnel, est protégée par un cache de protection 12 représenté seul en figure 4. Ledit cache de protection 12 a une forme circulaire. Il comporte un disque 125 couvrant la zone de connexion 10 et supporté par une couronne de base 120. Ladite couronne 120 a un diamètre inférieur à celui du disque 125 du cache de protection et adapté pour s'insérer dans l'anneau 100 de la zone de connexion 10. Ladite couronne 120 est munie de quatre encoches de verrouillage externes réparties suivant sa circonférence, de formes complémentaires aux encoches de verrouillage intérieures de la zone de connexion et disposées de manière, après un mouvement de translation du cache de protection pour emboiter les encoches de la zone de connexion 10 dans celles du cache de protection, à se verrouiller entre elles en tournant la couronne de base 120 du cache de protection 12 dans l'anneau 100 de la zone de connexion 10. Seules deux encoches de verrouillage 121, 122 du cache de protection 12 sont visibles sur la figure 4.

La cavité 1 peut être aménagée en outre en installant une paroi de fermeture de la cavité, de forme adaptée, pour retenir des objets dans la cavité, permettant d'utiliser cette cavité 1 comme rangement. Cette paroi est selon l'exemple une paroi de fermeture partielle de la base de la cavité, sous forme d'un filet 15 comme représenté sur la figure 5. Cette paroi de fermeture est amovible afin de pouvoir l'enlever pour utiliser la zone de connexion 10.

Comme indiqué plus haut, la zone de connexion 10 peut être utilisée pour y connecter un module fonctionnel.

Le connecteur mâle 11 comprend une fiche 110 de type USB-C qui est reliée à une extrémité d'un câble qui est notamment alimenté électriquement par le véhicule, la jonction entre le câble et la fiche étant entourée par une douille 111. Cette douille 111 est fixée rigidement dans l'encoche de verrouillage qui lui est proximale 101. Elle a une forme prismatique avec une base rectangulaire et est en une matière souple, notamment en silicone, de manière à faciliter l'ajustement du branchement du connecteur mâle 11 avec un connecteur femelle d'un module fonctionnel. La partie de branchement de la fiche USB 110 du connecteur mâle 11 et la douille de forme prismatique 111 passent dans l'encoche de verrouillage sous la partie saillante de la paroi intérieure de l'anneau 100 délimitant l'encoche de verrouillage, en suivant une partie de paroi intérieure de l'anneau 100 de la zone de connexion 10 pour venir hors de l'encoche de sorte qu'il soit accessible.

En référence aux figures 6A et 6B, la zone de connexion 10 est apte à recevoir un module fonctionnel lumineux 13, nomade, qui est une lampe rechargeable représentée seule en Fig.6B, selon un mode de réalisation particulier d'un ensemble console - module fonctionnel. Ce module 13 est globalement cylindrique et comprend une base de connexion 130 comportant un connecteur femelle 135 comportant une prise USB dans laquelle peut être connectée la fiche 110 du connecteur mâle 11 de la zone de connexion 10 de la console. Ladite prise USB est montée reliée à une extrémité d'un câble, la jonction entre le câble et la prise étant entourée d'une douille de forme prismatique avec une base rectangulaire et en une matière souple, notamment en silicone, de manière à faciliter l'ajustement du branchement des connecteurs femelle-mâle. Ce câble est notamment relié à des accumulateurs électriques (dits aussi « batterie rechargeable). La face 1300 de la base de connexion 13 est logée dans la zone de connexion 10 de la console quand le module y est fixé, la face opposée 136 du module étant la face visible qui éclaire quand la lampe est en fonctionnement.

Ladite base de connexion 130 du module 13 comprend des encoches de verrouillage 131, 132, 133, 134 qui sont de formes complémentaires à celles des encoches de verrouillage de la zone de connexion 10 de la console de manière à être mises en correspondance pour s'emboiter entre elles lorsqu'on tourne la base 130 du module dans l'anneau 100 de la zone de connexion 10 de la console. L'une 131 des encoches de verrouillage du module loge le connecteur femelle 135 qui est fixé en partie creuse de ladite encoche délimitée sur trois faces par des parois en relief par rapport au fond de l'encoche, la face de branchement de la prise du connecteur femelle étant dégagée. Deux des parois en relief qui délimitent le creux de l'encoche définissent d'un côté une première face 1311, celle de la paroi circulaire du module, et une deuxième face 1312, celle d'une partie en relief de l'élément de verrouillage. Ces deux faces sont sensiblement parallèles entre elles et suivent la direction de la circonférence de la base cylindrique du module pour former des faces de guidage 1311, 1312 du connecteur mâle 11 de la console, et plus particulièrement la face de la paroi circulaire qui est la plus longue 1311, ce qui facilite son guidage pour sa connexion au connecteur femelle 135 du module. La souplesse et la forme prismatique des douilles qui enveloppent les jonctions câble-connecteur, câbles respectifs des connecteurs mâle 11 et femelle 135, facilitent le guidage du connecteur mâle, notamment suivant la paroi en relief la plus longue 1311, et donc le guidage de celle de sa fiche 110 vers la prise du connecteur femelle 135 du module. La base de plus petites dimensions du prisme respectif de chaque douille de connecteur est du côté du branchement avec l'autre connecteur, pour faire « entonnoir » et ainsi faciliter le guidage de la connexion entre les connecteurs.

Le module s'emboite et se verrouille par un mouvement de translation (flèche F1) suivi d'un mouvement de rotation (flèche F2) afin de mettre en correspondance ses encoches de verrouillage avec celles de la console puis de les verrouiller entre elles, et qu'en fin de rotation les connecteurs USB-C mâle-femelle se connectent entre eux.

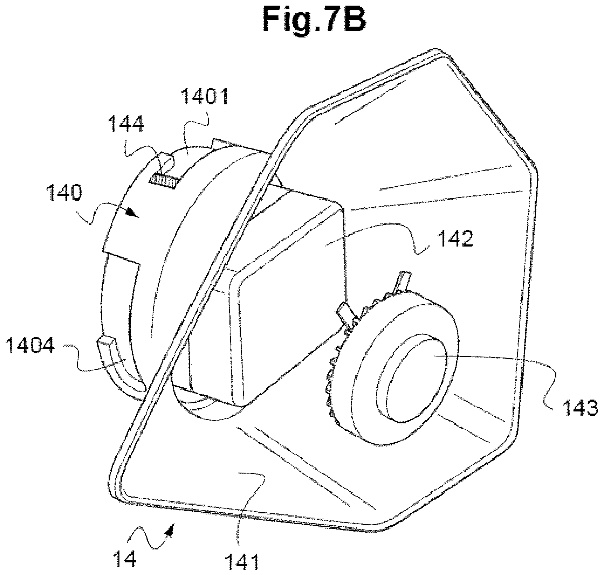

Une fois la lampe 13 connectée (Fig.6A), sa batterie rechargeable peut être rechargée à partir de la batterie du véhicule, lorsque le véhicule roule par exemple. La lampe pourra ainsi être utilisée de manière autonome. En référence aux figures 7A et 7B, la zone de connexion 10 est apte à recevoir un module fonctionnel audio 14, nomade, qui est une enceinte audio rechargeable représentée seule en Fig.7B, selon un autre mode de réalisation particulier d'un ensemble console - module fonctionnel. Ce module audio 14 comporte une base de connexion 140, similaire à la base de connexion 130 du module lumineux qui vient d'être décrit, et se connecte à la zone de connexion 10 de la console aussi de manière similaire. Cette base de connexion 140 et sa connexion à la console vont ainsi être décrites sommairement. Ladite base de connexion 140 comporte quatre éléments de verrouillage, dits encoches de verrouillage (deux 1401, 1404 étant seulement visibles sur Fig.7B), qui sont de formes complémentaires à celles des encoches de verrouillage de la zone de connexion 10. L'une des encoches de verrouillage 1401 loge un connecteur femelle 144 comportant une prise USB montée en une extrémité d'un câble dans une douille de forme prismatique et souple, en silicone, et dans laquelle peut être connectée la fiche 110 du connecteur mâle 11 de la zone de connexion 10 de la console. La base de plus petites dimensions du prisme respectif de chaque douille de connecteur est du côté du branchement avec l'autre connecteur, pour faire « entonnoir » et ainsi faciliter le guidage de la connexion entre les connecteurs.

Comme décrit pour le module de lampe précédent, le module audio s'emboite et se verrouille par un mouvement de translation-rotation afin de mettre en correspondance ses encoches de verrouillage avec celles de la console et de les verrouiller entre elles, et en fin de rotation les connecteurs USB-C mâle 11 - femelle 144 se connectent et permettent notamment le chargement des accumulateurs électriques 142 situés dans l'enceinte.

Selon l'exemple, l'enceinte audio comprend un pavillon fermé 141 en prolongement de la base de connexion 140. L'enceinte s'insère dans la cavité 1 de la console toutefois le pavillon ne touche pas les parois de la cavité de sorte que l'ensemble de l'enceinte puisse tourner suivant sa base de connexion 140 lors du verrouillage des encoches de verrouillage et de la connexion entre les connecteurs mâle - femelle, ce qui facilite la rotation du module comportant une forme de pavillon évasée avec une pointe triangulaire.

A l'intérieur de ce pavillon 141 se trouvent les accumulateurs électriques 142 et un excitateur 143. De manière connue en soi, ce dernier 143, qui est disposé en contact avec une paroi formant un couvercle 1410 qui ferme le pavillon, transmet le son par vibration de la matière. C'est le matériau dans lequel se transmet les ondes qui devient membrane. L'excitateur va faire vibrer l'enceinte qui transmet ces vibrations au corps de console via les encoches de verrouillage, ainsi c'est tout le corps de console qui entre en résonance.

L'enceinte une fois chargée peut être utilisée de manière autonome. Elle peut aussi doubler le système audio du véhicule automobile.

Selon un autre exemple d'application, ce système peut diffuser une seconde source sonore dans le véhicule. Par exemple le système peut diffuser un son similaire à un son d'échappement de moteur thermique alors que le véhicule est à traction électrique. Le système peut par exemple capter les sons environnants en transmettant une onde annulant les bruits parasites.

L'invention propose un aménagement d'une console en partie basse de la console peu utilisée jusqu'à maintenant. Un tel aménagement est facile d'accès et offre de nombreuses utilisations.

L'invention n'est toutefois pas limitée aux modules fonctionnels présentés, tout module fonctionnel, notamment nomade, comportant une base de connexion similaire à celles décrites peut convenir.

Dans une variante de réalisation non illustrée de l'invention, le corps accueillant l'organe fonctionnel peut être un corps de planche de bord, ou dans une autre variante un corps d'habillage intérieur d'une porte ou d'un garnissage intérieur de coffre.

## Revendications

1. Dispositif (C) d'aménagement intérieur d'un véhicule automobile, comprenant un corps, notamment un corps de console du véhicule, lequel comprend :
- une cavité (1) réalisée dans une partie libre dudit corps et débouchante vers l'extérieur dudit corps, et
- une zone de connexion (10), qui est située au fond de ladite cavité (1), comportant au moins un premier connecteur(11), et qui est délimitée par une paroi de forme circulaire (100) munie d'une pluralité d'éléments de verrouillage (101, 102, 103, 104) de forme allongée comportant des parties en creux et en relief, disposés espacés les uns des autres et suivant la surface circonférentielle de ladite paroi de forme circulaire, ledit premier connecteur (11) étant solidarisé à l'un desdits éléments de verrouillage (101), et
ladite zone de connexion (10) étant apte à recevoir un module fonctionnel (13, 14) muni d'un connecteur (135, 144) complémentaire audit premier connecteur (11) et d'une autre pluralité d'éléments de verrouillage (131, 132, 133, 134, 1401, 1404) de forme allongée comportant des parties en creux et en relief, complémentaires auxdits éléments de verrouillage de ladite zone de connexion du corps, ledit connecteur complémentaire (135, 144) étant solidarisé à l'un des éléments de verrouillage (131, 1401) de ladite autre pluralité d'éléments de verrouillage complémentaires, de sorte que ladite zone de connexion (10) du corps et ledit module fonctionnel (13, 14) se connectent et se verrouillent entre eux par un mouvement de translation afin de mettre en correspondance leurs éléments de verrouillage respectifs puis par un mouvement de rotation pour verrouiller les éléments de verrouillage mis en correspondance entre eux et qu'en fin de rotation ledit premier connecteur (11) et ledit connecteur complémentaire (135, 144) respectifs de la zone de connexion (10) du corps et du module (13, 14) se connectent entre eux.

2. Dispositif selon la revendication 1, **caractérisée en ce que** ledit premier connecteur (11) de la zone de connexion du corps est un connecteur électrique et/ou de données, en particulier de type USB, de préférence de type USB-C.

3. Dispositif selon l'une quelconque des revendications 1 à 2, **caractérisée en ce que** ledit premier connecteur (11) de la zone de connexion du corps est monté, en une extrémité de câble, dans une douille (111) de forme prismatique et/ou en matériau souple et de sorte que la base de plus petites dimensions du prisme soit du côté proximal de l'extrémité libre dudit connecteur.

4. Dispositif selon l'une quelconque des revendications 1 à 3, **caractérisée en ce que** ladite pluralité d'éléments de verrouillage (101, 102, 103, 104) disposés espacés les uns des autres et suivant la surface circonférentielle de ladite paroi de forme circulaire (100), est disposée suivant la surface circonférentielle intérieure de ladite paroi de forme circulaire.

5. Dispositif selon l'une quelconque des revendications 1 à 4, **caractérisée en ce que** ladite cavité (1) est débouchante latéralement vers l'extérieur dudit corps, et de préférence en partie basse du corps.

6. Ensemble console - module fonctionnel comprenant un dispositif (C) selon l'une quelconque des revendications 1 à 5, le corps appartenant à la console, et un module fonctionnel (13, 14) comportant une base de connexion ( 130, 140) munie d'au moins un connecteur complémentaire (135, 144) à l'au moins premier connecteur de la zone de connexion (10), et munie d'une autre pluralité d'éléments de verrouillage (131, 132, 133, 134, 1401, 1404) de forme allongée comportant des parties en creux et en relief, complémentaires auxdits éléments de verrouillage (101, 102, 103, 104) de ladite zone de connexion (10) de la console, ledit connecteur complémentaire (135, 144) étant solidarisé à l'un des éléments de verrouillage (131, 1401) de ladite autre pluralité d'éléments de verrouillage,
ledit module fonctionnel (13, 14) se connectant et se verrouillant dans ladite zone de connexion (10) de la console par un mouvement de translation afin de mettre en correspondance lesdits éléments de verrouillage de ladite autre pluralité d'éléments de verrouillage avec lesdits éléments de verrouillage (101, 102, 103, 104) de ladite zone de connexion (10) de la console puis par un mouvement de rotation suivant la circonférence des parois de forme circulaire respectives de la zone de connexion (10) de la console et de la base de connexion (130, 140) du module, afin de verrouiller les éléments de verrouillage respectifs de la console et du module entre eux et qu'en fin de rotation ledit premier connecteur (11) et ledit connecteur complémentaire (135, 144) respectifs de la zone de connexion (10) de la console et de la base de connexion (130, 140) du module (13, 14) se connectent entre eux.

7. Ensemble selon la revendication 6, ledit premier connecteur (11) de la zone de connexion (10) de la console étant un connecteur électrique et/ou de données, en particulier de type USB, de préférence de type USB-C selon la revendication 2, et ledit connecteur complémentaire (135, 144) de la base de connexion du module fonctionnel est un connecteur électrique et/ou de données, en particulier de type USB, de préférence de type USB-C, et l'un étant un connecteur mâle et l'autre un connecteur femelle.

8. Ensemble selon l'une des revendications 6 à 7, **caractérisé en ce que** ledit premier connecteur (11) de la zone de connexion (10) de la console et ledit connecteur complémentaire (135, 144) de la base de connexion (130, 140) du module fonctionnel sont montés respectivement chacun dans une douille de forme prismatique et/ou en matériau souple, et de sorte que la base de plus petites dimensions du prisme respectif de chaque douille de connecteur soit du côté du branchement avec l'autre connecteur.

9. Ensemble selon l'une des revendications 7 à 8, **caractérisé en ce que** l'un des connecteurs (11, 135, 144) est fixé dans une partie en creux d'un élément de verrouillage, la face de branchement dudit connecteur étant dégagée, et ladite partie en creux étant encadrée par au moins une première face (1311) d'une paroi circulaire et une deuxième face (1312) d'une partie en relief d'un élément de verrouillage, opposée à ladite première face, lesdites première (1311) et deuxième (1312) faces s'étendant au moins partiellement suivant la direction de la circonférence de ladite paroi (100) de forme circulaire de la zone de connexion (10) de la console et/ou de la base de connexion (130, 140) du module et étant espacées sensiblement parallèlement entre elles, pour former des faces de guidage (1311, 1312) de l'autre connecteur vers ledit connecteur fixé dans ladite partie en creux d'un élément de verrouillage.

10. Véhicule automobile comprenant un ensemble console - module fonctionnel selon l'une quelconque des revendications 6 à 9, et en particulier ladite console est une console centrale située entre deux sièges du véhicule.
